# EUROPEAN PATENT APPLICATION

(11) **EP 4 509 198 A1**
(43) Date of publication of application: **19.02.2025**
(21) Application number: 23192232.9
(22) Date of filing: 18.08.2023
(51) Int. Cl.: B01D 19/00, C02F 1/20, B23K 26/12, B23K 26/38, B23K 26/70

(54) **LASER PROCESSING SYSTEM, AND METHOD**

(71) Applicant: Bystronic Laser AG, 3362 Niederönz (CH)
(72) Inventor: AMSTAD, Beat, 3366 Bettenhausen (CH); GFELLER, Robert, 3074 Muri bei Bern (CH); LÜDI, Andreas, 3400 Burgdorf (CH)
(74) Representative: Frei Patent Attorneys

(57) **Abstract**

The present disclosure concerns a laser processing system with a laser processing machine, especially a laser processing machine equipped to generate the laser radiation with a power of at least 1 kW. The laser processing system further comprises a water-cooling unit (1) operable to cool at least one component of the laser processing machine. The water-cooling unit comprises a cooling water circuit for the cooling water and a protective gas supply for supplying a protective gas to the cooling circuit for bringing the cooling water in the cooling circuit in contact with the protective gas, such as Nitrogen or Argon. This will cause diffusion of oxygen out of the water due to the concentration gradient until an equilibrium with strongly reduced oxygen concentration in the water is reached. Thus, the simple measure of supplying a protective gas to the cooling water circuit causes the cooling water to be less corrosive and, because of the absence of oxygen, to prevent the growth of microorganisms.

## Description

The invention is in the field of laser processing systems, in particular for laser cutting. Especially, it is in the field of laser processing machines, particularly laser cutting machines, with a laser power of 1 kW or more.

Laser processing machines with high laser powers of 1 kW or more, especially laser cutting machines, usually require cooled components. Several components need to be cooled due to absorption of the laser power, especially components which are typically part of a laser processing head, especially of a laser cutting head. An optical aperture or mirror of such laser processing or cutting head that comes into contact with high laser power absorbs some 10W even with low absorption of 1% or less. In the case of optical shutters and optical apertures, which are used in such laser processing or cutting heads to selectively cut off edge parts of the laser beam, the absorbed laser power may well rise to several times 100 W. The absorbed laser power produces waste heat that must be dissipated by cooling the respective component.

The laser source itself must also be well cooled. The efficiency of a typical laser source is between 10% and 50%. This means that in order to generate 1kW laser beam power, at least 1 kW of waste heat is generated, which must be dissipated by cooling.

In addition to the optical components, there are often motors of axes (robot axes, etc.) in processing systems that must be cooled.

Cooling is usually done with water. Water has a large heat capacity, can absorb a lot of heat and is available worldwide. Often, a cooling unit is integrated in a laser processing machine or is placed in a vicinity thereof. The cooling unit supplies cooling water to the components to be cooled via a supply line. The cooling water thereby is heated up and returns to the cooling unit, where the cooling water is, for example via an air-water heat exchanger, cooled to its initial temperature.

Water cooling has its disadvantages, too. Especially, the cooling water may cause corrosion of the components that come into contact with it. Also, microorganisms may develop in the water, and this may reduce the cooling capacity and clog or even block cooling channels.

In order to reduce corrosion and to combat microorganisms, it has been known to add additives and inhibitors to the cooling water. Such chemicals reduce corrosion and the generation of microorganisms. However, they are poisonous, detrimental for the environment and subject to environmental regulations, as well as difficult to obtain and to ship.

It is an object of the present invention to provide a laser processing system, in particular a laser processing system with a laser cutting machine, and a method of operating a laser processing system overcoming drawbacks of previous laser processing systems and operating methods. Especially, it is an aim to reduce corrosion and/or combat microorganisms in the cooling water lines of the laser processing system without the need for toxic chemicals and without adding too much complexity.

According to an aspect of the present invention, a laser processing system is provided. The laser processing system comprises a laser processing machine being equipped to generate laser radiation that during operation impinges on a workpiece for processing the workpiece, for example for generating a cut in the workpiece. The laser processing machine is especially equipped to generate the laser radiation with a power of at least 1 kW. The laser processing system further comprises a water-cooling unit operable to cool at least one component of the laser processing machine. The water-cooling unit may belong to the laser processing machine or may be a separate unit. In embodiments, the laser processing system may consist of the laser processing machine, i.e,. it is possible that all parts of the laser processing system are integrated in the laser processing machine and are for example controlled by the machine control of the laser processing machine.

The laser processing machine may in particular be a sheet and/or tube metal laser processing machine. In particular, the laser processing machine may be a laser cutting machine. More in particular, it may be a flatbed laser cutting machine for cutting sheet metal or a tube laser cutting machine.

The water-cooling unit comprises a cooling water circuit for the cooling water. Such cooling water circuit comprises a vessel for the cooling water and a cooling water line for supplying cooling water from the vessel to one or more components of the laser processing machine, and for directing the cooling water back to the vessel. The laser processing system further comprises a protective gas supply for supplying a protective gas to the cooling circuit.

Thus, in accordance with the approach according to the present invention, the laser processing system is equipped for bringing the cooling water in the cooling circuit in contact with a protective gas, such as Nitrogen or Argon. This will cause diffusion of oxygen out of the water due to the concentration gradient until an equilibrium with strongly reduced oxygen concentration in the water is reached. The same holds true for other corrosive substances such as carbon dioxide, which, when dissolved in the cooling water, causes the cooling water to be acidic. Thus, the simple measure of supplying a protective gas to the cooling water circuit causes the cooling water to be less corrosive and, because of the absence of oxygen, to prevent the growth of microorganisms.

Thus, the invention proposes to avoid corrosion and the growth of microorganisms by removing oxygen and possibly other corrosive substances from the cooling water by diffusion. In contrast to solutions in which the oxygen is kept out of the cooling water by making the cooling circuit perfectly gas-tight, this is both, more economical and more practicable. For keeping the oxygen out of the cooling water, the cooling water circuit would otherwise have to be perfectly closed, which in reality is very difficult to achieve without unreasonable efforts and requirements, also in view of the facts that conventional seals, pipes, connections and screw fittings are usually not gas tight, that a water tank with an air volume (as expansion space) is required, and that parts need to be exchanged from time to time so that the cooling water circuit needs to be opened for this purpose.

In many embodiments, the vessel of the cooling water circuit is a closed vessel. The protective gas supply may then be equipped and positioned for supplying the protective gas to the closed vessel, directly or indirectly (an indirect supply to the closed vessel is for example constituted by a supply opening into the cooling water return line so that the protective gas is conveyed alongside with the returning cooling water into the closed vessel).

The vessel may be a water tank. If the vessel is a closed vessel and the protective gas is supplied directly or indirectly to the closed vessel, during operation, the interior of the closed vessel, into which the protective gas is supplied, the volume will be divided between a (lower) water volume and an (upper) gas volume, with a water surface therebetween. Because of the supply of the protective gas to the vessel, there will be a reduced (compared to air) oxygen partial pressure in the gas volume, whereby the above-mentioned diffusion of oxygen and/or possibly other corrosive substances out of the cooling water may take place through the interface between the water volume and the gas volume in the closed vessel.

The closed vessel may be closed in that, as opposed to an open trough, it holds a gas above the cooling water. The closed vessel therein does not have to be gastight, though. It may be even advantageous if the closed vessel exhibits some - intended - leakage. Due to differences in temperature, evaporation etc. the water level in the closed vessel keeps changing during operation. Thus, the system needs to be capable of adapting to such changes. Such adaptation could be done by a separate expansion vessel, as known from heating systems, or by a valve-and-filter arrangement or, as mentioned, by allowing for some residual leakage. A certain leakage has the additional advantage that when the protective gas is supplied to the cooling water circuit, no separate measure for allowing the displaced air to flow out has to be taken. The disadvantage - namely that also the protective gas diffuses out of the closed vessel and thus needs to be supplied continuously or at least in frequent intervals is not severe, as for example nitrogen gas is inexpensive, easily available, and its release into the atmosphere obviously does not have any disadvantages for the environment.

The protective gas may for example be nitrogen. Nitrogen gas is inexpensive and easy to obtain, and it is present in most laser processing systems anyway; for example in laser cutting machines, nitrogen is a common process gas. Alternative protective gases are Argon or other gases, including mixtures, that are essentially free of oxygen or at least have, compared to air, a strongly reduced oxygen content of for example at most 3%, at most 1%, at most 0.5% or at most 0.1%. Particular examples include nitrogen or Argon (or mixtures between these two) with a maximum oxygen content of 500 ppm (parts per million), possibly less than 100 ppm, less than 20 ppm or less than 10 ppm. For example, so-called oxygen-free nitrogen comprises 0.002% (20 ppm) oxygen or less. A property of the protective gas may be that also the content of carbon dioxide is substantially (by at least a factor 2, especially at least a factor 10) reduced compared to the carbon dioxide content of air. Both, the property of being essentially oxygen free and the property of being essentially carbon dioxide free are properties of inexpensive industrial nitrogen gas.

Because a pumping system with at least one pump will, during operation, pump water out of the vessel and back into the vessel, there may be turbulences in the vessel, which may enlarge the water surface, in addition to causing a stirring effect. This fosters the diffusion of oxygen and/or carbon dioxide out of the cooling water and thereby accelerates the process of reaching the equilibrium with a low oxygen/carbon dioxide concentration.

The supplying of the protective gas into the closed vessel can be continuous, with a constant flow of gas or intermittently, for example only while laser processing is on, twice or once a day, once a week, etc., or even only after the cooling water circuit had to be opened for maintenance - depending on how closed and tight the cooling water circuit is. It is also possible that the oxygen content (or other indicator, for example the pH value, indicative of the carbonic acid content) of the water and/or of the gas in the gas volume is, constantly or in intervals, measured and gas is supplied only when a certain condition is fulfilled, for example when a measured value is above a threshold value.

The protective gas may be supplied directly into the gas volume of the closed vessel or possibly also into the lower part of the closed vessel (thus into the water volume), which latter will result in additional turbulences so as to accelerate the diffusion of the oxygen out of the water. It is also possible to supply the protective gas indirectly to the closed vessel, by feeding it to another place in the cooling water circuit and allowing it to be conveyed, alongside with the cooling water, to the closed vessel.

The closed vessel may be a dedicated storage vessel (water tank) for the cooling water. It may alternatively be constituted by a portion of the cooling system that in addition serves another purpose, for example by a heat exchanger by which the cooling water is cooled.

The cooling unit may, in addition to comprising the closed vessel and the cooling line or cooling lines, also comprise at least one pump for pumping the water out of the closed vessel to the component(s) to be cooled and back to the closed vessel. In addition, it may optionally comprise a measurement device for measuring a property of the cooling water and/or of the gas in the closed vessel, for example the oxygen content of the cooling water, its pH value, and/or other any other property of the cooling water and/or the oxygen content and/or carbon dioxide content of the gas in the closed vessel, etc.

Further, the cooling unit may comprise a cooling section, for example with a heat exchanger, for cooling the cooling water. Such heat exchanger may be an air-water heat exchanger giving off heat to the environment, by comprising cooling fins or similar. It may also be a water-water heat exchanger giving off heat to secondary cooling water, which may for example be tap water or water in a secondary cooling circuit, wherein the heat may for example be recovered for heating purposes or the like. As an even further alternative, it may belong to an active chiller that takes heat from the cooling water, for example using the heat pump principle.

A heat exchanger of such cooling section may be arranged in the path of the cooling water between the closed vessel to the component(s) to be cooled and back to the cooling vessel, and/or it may belong to a separate cycle in that cooling water is taken from the closed vessel to the heat exchanger and conveyed back to the closed vessel from there. It is not even a requirement that the cooling liquid circulates in a closed circle, i.e., in embodiments where there are no contamination issues, it would even be possible that at least a portion of the cooling water is disposed of after it has been in contact with the component(s) to be cooled and that a continuous flow of fresh, cool water is supplied to the closed vessel.

The laser processing machine as described in this text may be equipped for emitting a laser having a power of at least one 1 kW, especially at least 5 kW or at least 10 kW.

In addition to concerning a laser processing system, the present invention also concerns a method of operating a laser processing system - for example, a laser processing system as described and claimed in the present text. The method comprises providing the laser processing system that has a laser processing machine and a cooling unit, the cooling unit equipped to cool at least one component of the laser processing machine by supplying cooling water to it. The method comprises the steps of conveying the cooling water from a closed vessel to the component(s) to be cooled and of supplying a protective gas to the closed vessel.

The method may further comprise the step of measuring the oxygen content and/or the carbon dioxide content of the cooling water and/or the gas in the gas volume, as specified hereinbefore. Depending on the result of the measurement, for example if the oxygen content/carbon dioxide content is above a threshold value, fresh protective gas may be supplied. In addition or as an alternative, it is also possible to supply fresh protective gas intermittently, for example in regular intervals.

The supplying of fresh protective gas, for example in a continuous flow, may in addition or as an alternative to being dependent on a measurement, also depend on an operation mode. For example, it may be switched off when the laser processing system, especially the cooling unit, does not run and be switched on if it does. In addition or as an alternative, the flow of protective gas may be high after switching on and be reduced a certain time after the machine has started running.

Hereinafter, embodiments of the present invention are described in more detail referring to drawings. In the drawings, same reference numbers refer to same or similar components. They show:
- Fig. 1:: a laser processing system comprising a flatbed laser cutting machine and a cooling unit;
- Fig. 2: a cooling unit for a laser processing system comprising a flatbed laser cutting machine; and
- Fig. 3: results of a measurement of the oxygen content in cooling water.

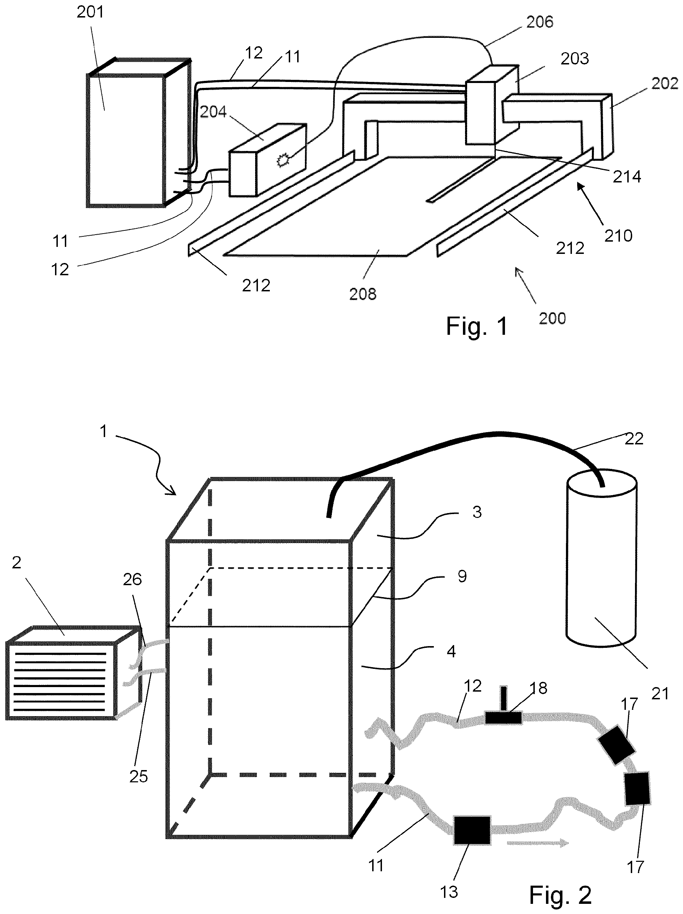

**Figure 1** shows an example of a laser processing system 200 comprising a laser cutting machine 210 and a cooling unit 201. The laser cutting machine 210 comprises a laser source 204, a transport fiber 206, a laser cutting head 203, and a laser cutting head moving mechanism. A workpiece 208 is supported by a working table (not shown in Fig. 1). The laser cutting head moving mechanism comprises a bridge 202 relative to which the laser cutting head 203 is movable in a first horizontal direction and which itself is movable, for example on a pair or rails 212, in a second horizontal direction relative to the working table and the workpiece 208. The laser cutting head 203 during operation emits a laser cutting beam 214 in a substantially vertical direction downwards onto the workpiece to cause a cut when it is moved relative to the latter. The workpiece 208 may be a metal plate that is cut by a laser processing beam emitted by the laser cutting head. At least one component of the laser processing machine is cooled by the cooling unit in that cooling water is conveyed through a supply line 11 to the component. In Fig. 1, it is the laser source 204 and the laser cutting head 203 that are illustrated to be cooled. Within the laser cutting head a component that may be subject to irradiation by laser radiation, such as an aperture, a nozzle, an optical shutter, a mirror etc. may be directly cooled by the cooling water; possibly in addition or as an alternative to the entire laser cutting head, for example by a thermal contact to its casing. Further, also at least one other component could be cooled, for example the motors for moving the bridge and/or for moving the laser cutting head relative to the bridge, the working table. If more than one component is cooled, the cooled components the cooling water may flow to one component after the other (serial arrangement) and/or more than one supply pipes may direct the cooling water to the different components or groups of components (parallel arrangement, as schematically illustrated in Fig. 1). Return lines12 are also illustrated in Fig. 1.

In embodiments, the cooling unit is located near the laser source, so that the cooling lines to the laser source and back are not too long, even though they are usually 2 m long or more. The cooling water circuit to the cutting head incl. return flow, on the other hand, may have a length of at least 20 m.

The cooling water circuit of the cooling unit comprises a closed vessel 1, namely a water tank, as shown in **Figure 2****.** A pump 13 located in the supply line 11 pumps the cooling water from the closed vessel 1 to the components 17 to be cooled. Fig. 2 also illustrates an optional sensor 18, for example for measuring the oxygen content. In Fig. 2, the pump 13 is illustrated to be located in the supply line 11, and the - optional - sensor 18 is located in the return line 12. However, this is not a requirement. The pump 13 could also be arranged in the return line 12 and/or the optional sensor 18 could be arranged in the supply line.

Further it should be mentioned that in embodiments not all components to be cooled are in the same cooling water circuit, and more than one cooling water circuit, each possibly provided with a designated pump, may be present.

In embodiments, the flow of the cooling water to the laser source is considerably higher than the flow of the cooling water for example by between a factor 10 and a factor 100 than the flow of cooling water to the laser cutting head. The flow of cooling water to the linear motors (if present) may also be lower than the flow to the laser source but may be higher than the flow to the laser cutting head. The adaptation of the flow of the cooling water to the different components may be done in accordance with the used laser power and experience and/or experiments.

Fig. 2 illustrates a second circuit with a heat exchanger 2 as well as a heat exchanger supply line 25 and a heat exchanger return line 26. In addition, the second circuit may comprise a pump (not shown) for pumping the cooling water into the heat exchanger and back into the closed vessel 1. The heat exchanger 2 has a structure allowing it to exchange heat between the cooling water and air for cooling the cooling water. It would be possible also to use a liquid/liquid heat exchanger or an active cooler, of which the heat exchanger would then be part.

In addition or as an alternative to belonging to a second circuit, a heat exchanger could for example be located in the return line 12 of the cooling water circuit.

The closed vessel 1 is filled with the cooling water up to a cooling water level 9, whereby a water volume 4 and, above the water level 9, a gas volume 3 is formed. A gas supply line 22 supplying the protective gas in the depicted embodiment opens into the gas volume 3. In the depicted embodiment, the protective gas - for example nitrogen - is illustrated to be supplied from a protective gas container 21, namely a gas cylinder, that belongs to laser processing system itself. However, it is also possible that the protective gas is taken from a gas piping of a facility in which the laser processing system is integrated, the facility having a central gas storage and/or nitrogen gas production.

The protective gas may be nitrogen. Alternatively, it may be of another gas composition with an oxygen content and/or carbon dioxide content substantially reduced compared to air.

The effect of supplying the protective gas to the closed vessel is as follows: The protective gas will displace the air in the gas volume above the cooling water. Thereby, the partial pressure of oxygen and other gases not contained in the protective gas will be diminished. As far as these gases are dissolved in the cooling water, these gases will diffuse out of the cooling water at the water-gas interface (especially the surface that defines the water level 9) until an equilibrium with a much lower content of these gases in the cooling water is reached.

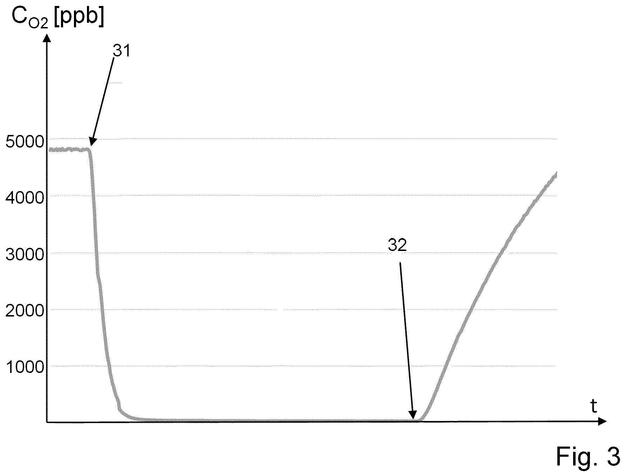

**Figure 3** shows the result of an according measurement, depicting the oxygen content in ppb (parts per billion) in the cooling water as a function of time t. The oxygen content in the cooling water is between 4 and 5 ppm (parts per million; or, equivalently, between 4 and 5 mg/l). Starting at a first point in time 31, the water tank is flooded by nitrogen gas (industrial quality, oxygen content less than 500 ppm, possibly less than 100 ppm, less than 20 ppm or less than 10 ppm). The oxygen concentration in the cooling water sinks rapidly, until about 2-4 hours after the first point in time 31 a new equilibrium is reached, with the oxygen content far below 100 ppb and close to the detection limit of the sensor used. A gas flow of nitrogen into the closed water tank is maintained up to a second point in time 32. The water tank is an example of a closed vessel that is not perfectly gastight, so that due to the flow of nitrogen gas into the tank, there is a constant flow of gas out of the water container. After the flow of nitrogen gas into the container stops at the second point in time, the oxygen concentration in the water tank slowly rises again. A reason for this is that there is a constant movement of the cooling water in the water tank, and due to this there is also a constant movement of the gas above the cooling water level. This movement enhances exchange between the gas in the water tank and ambient air, so that the oxygen concentration in the gas raises, and as a consequence also in the cooling water. Further, also in other parts of the cooling circuit, the cooling water may come into contact with oxygen. As long as the oxygen concentration in the cooling water is still low, diffusion tends to raise the oxygen content. Between the first point in time 31 and the second point in time 32, there is a time span of 24 hours.

Further experiments were made with the cooling water circuit switched off, to investigate how strong the oxygen concentration raises absent the water movements caused by the flow of the cooling water. The increase of the oxygen concentration was found to be significantly slower than with the cooling circuit switched on. After 24 hours, the Oxygen concentration rose to about 200 ppb, after 4 days to 400 ppb, and after 10 days to only 600 ppb. This illustrates that, depending on the set-up, the flow of protective gas can easily be switched off during longer interruptions of operation, for example during weekends, without having a significant rise of oxygen concentration in the cooling water.

The dynamics of the process illustrated in Fig. 3 is influenced by the fact that the water pump actively pumps the water, with a relatively high throughput, which will cause turbulences in the water and thereby accelerate the process of reaching an equilibrium with very low oxygen content in the cooling water. In alternative set-ups where this process is too slow without further measures, it would be an option to actively agitate the cooling water and/or to design the closed vessel in a manner that the water-gas interface is enlarged.

In the embodiment described hereinbefore, the nitrogen gas is supplied directly to the gas volume 3 if the closed vessel 1, i.e. the upper part of the water tank. As an alternative, the protective gas could also be supplied to the water volume, from where it bubbles up into the gas volume. This alternative at the same time is a measure for accelerating the process of reaching a new equilibrium because the water is agitated by this, and the surface is enlarged.

In embodiments different from the embodiment with which the experiments were made, for allowing the displaced air to escape when the protective gas is supplied to the closed vessel, an access may be temporarily opened. It is also possible to provide an opening with a check valve or other measure for allowing the air to escape making sure that, once the water tank is flooded by the protective gas, no air diffuses into back into the water tank. For example in embodiments, as the one discussed hereinbefore, in which the upper part of the water tank is a bit leaky, it may be the most straightforward to implement option to ensure a constant flow of the protective gas into the water tank that constantly causes a slight overpressure in the air volume.

## Claims

1. A laser processing system (200), comprising a laser processing machine equipped to generate laser radiation for impinging on a workpiece, the laser processing system further comprising a water-cooling unit (201) with a cooling water circuit comprising a vessel (1) that comprises a cooling water line for supplying cooling water from the vessel (1) to at least one component of the laser processing machine and for directing the cooling water back to the vessel (1), wherein the laser processing system is **characterized by** a protective gas supply (22) to supply a protective gas to the cooling water circuit.

2. The laser processing system of claim 1, wherein the protective gas supply (22) is a nitrogen supply.

3. The laser processing system according to claim 1, wherein the vessel (1) of the cooling water circuit is closed, and wherein the protective gas supply (22) is arranged and equipped to supply the protective gas to the closed vessel (1).

4. The laser processing system of claim 3, wherein the closed vessel (1) comprises a gas volume (3) above a water volume (4), and wherein the protective gas supply (22) is equipped to supply the protective gas to the gas volume (3).

5. The laser processing system of any one of the previous claims, wherein the cooling unit (201) further comprises a measurement device for measuring an oxygen content and/or carbon dioxide content of the cooling water and/or of gas in the cooling water circuit.

6. The laser processing system of any one of the previous claims, wherein the cooling unit (201) further comprises a cooling section with a heat exchanger (2) for dissipating heat out of the cooling water.

7. The laser processing system according to any one of the previous claims being equipped to emit laser having a power of at least 1 kW.

8. The laser processing system according to any one of the previous claims, being a laser cutting system, wherein the laser processing machine is a laser cutting machine.

9. A method of operating a laser processing system (200) that has a laser processing machine and a cooling unit equipped to cool at least one component of the laser processing machine by supplying cooling water to, wherein the cooling unit has a cooling water circuit for the cooling water, the method comprising the step of supplying a protective gas to the cooling water circuit.

10. The method according to claim 9, wherein the protective gas is nitrogen gas.

11. The method according to claim 9 or 10, comprising the further step of measuring the content of oxygen and/or carbon dioxide in the cooling water and/or in gas in the cooling water circuit.

12. The method according to claim 11, and comprising the step of supplying fresh protective gas depending on a result of the step of measuring.

13. The method according to any one of claim 9-12, and comprising the step of supplying fresh protective gas intermittently, in regular intervals.

14. The method according to any one of claims 9-13, and comprising the step of supplying fresh protective gas depending on an operation mode.

15. The method according to any one of claims 1-14, wherein an oxygen content in the protective gas is at most 200 ppm.
